# EUROPEAN PATENT SPECIFICATION

(11) **EP 2 258 578 B1**
(45) Date of publication and mention of the grant of the patent: **21.10.2015**
(21) Application number: 10163324.6
(22) Date of filing: 19.05.2010
(51) Int. Cl.: B60K 31/00, G08G 1/0962, G08G 1/0967, B60W 50/14, B60W 30/14

(54) **Device for generating an alarm in response of the speed of a vehicle**
Vorrichtung zur Erzeugung eines Alarms als Reaktion auf die Geschwindigkeit eines Fahrzeugs
Dispositif de génération d'une alarme en réponse à la vitesse d'un véhicule

(30) Priority: 19.05.2009 IT RE20090007 U
(43) Date of publication of application: 08.12.2010
(73) Proprietor: CF3000 - S.R.L., 42123 Reggio Emilia (IT)
(72) Inventor: Corradini, Flavio, 42100 Reggio Emilia (RE) (IT); Ricci, Rinaldo, 42100 Reggio Emilia (RE) (IT)
(74) Representative: Corradini, Corrado

(56) References cited:
- EP-A1- 2 028 047
- EP-A2- 1 162 102
- WO-A1-2005/109368
- US-A- 6 163 277
- US-A1- 2006 061 461

## Description

The present invention relates to an apparatus designed to generate an alarm signal or a warning for the driver of a vehicle in relation to the speed of the vehicle.

Devices are known which notify the driver that the vehicle has exceeded the legal speed limit for a determined tract of road.

In particular, these devices primarily identify the geographical coordinates of the vehicle on which the device is installed via an antenna and a GPS receiver.

Having established the coordinates, a map exploration is undertaken, for example by using an ADAS (Advanced Driver Assistance System) function or the like, and the speed limit for that part of the road is thus identified.

Using the same antenna and GPS receive used for reading the position, the actual present speed of the vehicle the device is installed on is identified. This speed is then compared with the limit detected by the maps.

In the prior art these devices can be used for signalling to the vehicle driver than a determined speed has been exceeded. In these cases however only one speed limit can be used, rigidly set. For example, 130 Km/h can be used as a limit for motorways, but in this case the known systems do not provide any warning in a case of exceeding a limit of 50 km/h or 90 km/h respectively in urban or extra-urban areas.

Alternatively, an alarm is described which warns the vehicle driver when he or she has exceeded the exact speed limit, derived from the maps.

For example, in cities an alarm is emitted when 50 km/h is exceeded, in extra-urban roads an alarm is set off at 90 km/h, while in motorways an alarm is sounded when 130 km/h is exceeded.

Document US 6 163 277 discloses a system in which the speed of a vehicle is monitored and, if it exceeds the speed limit, cumulative penalty information (e.g.: financial penalty data) can be provided to the user. The system also provides for a signal to alert the driver if the speed limit is exceeded by a first speed. If the speed limit is exceeded by a second and higher speed, an alert is sent to the police.

US 2006/061461 discloses a system to send two different signals expressed in terms of different frequencies if the speed limit is exceeded by a first or by a second higher vehicle speed. These limits are not correlated to any penalty system.

EP 2 028 047 discloses a system in which a series of warning means are provided on the body of the vehicle that may signal to third parties that the vehicle is driven at an excessive speed, depending on various conditions.

EP 1 162 102 discloses a system that displays various different signals as a function of the speed of the vehicle, for example blue, if the speed is higher than the speed limit, but below a certain value (e.g.: 15% above limit) a yellow signal is displayed. If the speed is even higher, a red signal is displayed. These signals are not correlated to specific penalties.

The illustrated prior art exhibits however the problem that in all cases the known devices do not provide frequent signalling that speed limits have been exceeded, and the driver therefore becomes inattentive, leading to the signalling of the device becoming useless.

The aim of the present invention is to obviate the above-mentioned problem by means of an apparatus for generating alarms according to the speed of a vehicle which exhibits a dynamic functioning and such as to maintain the driver's attention on the alarms generated.

A further aim is to realise an apparatus which sensitises the driver in relation to the various legal consequences of exceeding the speed limits according to the situations and the localities in which the vehicle is moving.

A further aim of the invention is to obviate the above-mentioned problem rationally and economically.

The aims are attained thanks to an apparatus for generating an alarm signal according to the vehicle speed, able to differentiate the characteristics or types of alarm signal according to the difference between the present velocity of the vehicle and the legal speed limit for the tract of road the vehicle is driving along, and thanks to an actuation method of the apparatus.

In particular, an embodiment of the invention makes available an apparatus for generating an alarm signal for the vehicle driver according to the actual present speed of the vehicle, comprising a device for determining the present speed of the vehicle, a device to determine automatically the country in which the vehicle is travelling by means of the identification of the geographical coordinates relative to the position of the vehicle by a GPS receiver or a multi-choice selector by means of which the country the vehicle is circulating in can be selected, means for detecting the speed limit of the tract of road the vehicle is driving along, an electronic control unit connected to the device and to the detecting means and provided with a data storage unit for storing the speed limit, wherein the electronic control unit comprises a database which stores for each country the speed limits set by the law in the country in which the vehicle is travelling and any penalties relating to the speed limits, the electronic control unit being configured to determine the difference between the speed limit and the actual vehicle speed, the apparatus further comprising signalling means for generating at least an alarm for the driver, further characterised in that the signalling means are configured such as to differentiate the alarms according to the license penalty points set out in the existing laws in the locality the vehicle is situated in corresponding to the determined difference between the vehicle speed and the speed limit.

In the invention, the speed limit detecting means can comprise a circuit on which a software program is installed for detecting the speed limits from road maps, or an optical system designed such as to capture images of speed limit signals indicated on road signal means along the road, and a software program, stored in the electronic control unit 11, for optically recognising the characters present in the images picked up by the optical system. Alternatively, in the invention the speed limit detecting means can comprise a receiving system for the speed limits in the form of data.

In the invention, the signalling means the apparatus equips can comprise a device for generating an acoustic alarm signal which exhibits different frequencies according to the amount the limit has been exceeded by, and/or a project for generating an alarm signal of a visual type.

In particular the projector is configured to project a visual alarm signal, with different types of flashing depending on the amount the speed limit has been exceeded by. The projector is preferably configured to generate and project different visual alarm signals in HUD mode.

Alternatively to the above-cited solutions, the signalling means can comprise a transmission system (16) destined to transmit a remote alarm signal in the form of an SMS text message, or an alarm to be sent to predefined telephone numbers, indicating a difference between the actual speed of the vehicle and the speed limit. This message is predefined and stored in the electronic control unit 11 or in the data storage unit.

In a further variant the signalling means comprise a transmission system configured to transmit a remote alarm signal in the form of data, via the World Wide Web, i.e. an alarm signal to be displayed in a web-site, with an indication of the speed limit that has been exceeded.

The invention further comprises a method for controlling the functioning of an apparatus for generating an alarm signal according to the speed of a vehicle, which is able to distinguish between the characteristics or type of the alarm signal according to the difference between the actual speed of the vehicle and the legal speed limit for the tract of road the vehicle is moving along. This method comprises stages according to claim 13.

Further characteristics and advantages of the invention will emerge from a reading of the following description, provided by way of non-limiting example with the aid of the figures of the drawings illustrated in the accompanying tables, in which:
figure 1 is a block diagram of a first embodiment of the invention,
figure 2 is a block diagram of a variant of a second embodiment of the invention,
figure 3 is a block diagram of a variant to the embodiments of the invention, figure 4 is a block diagram of a second variant to the embodiments of the invention.

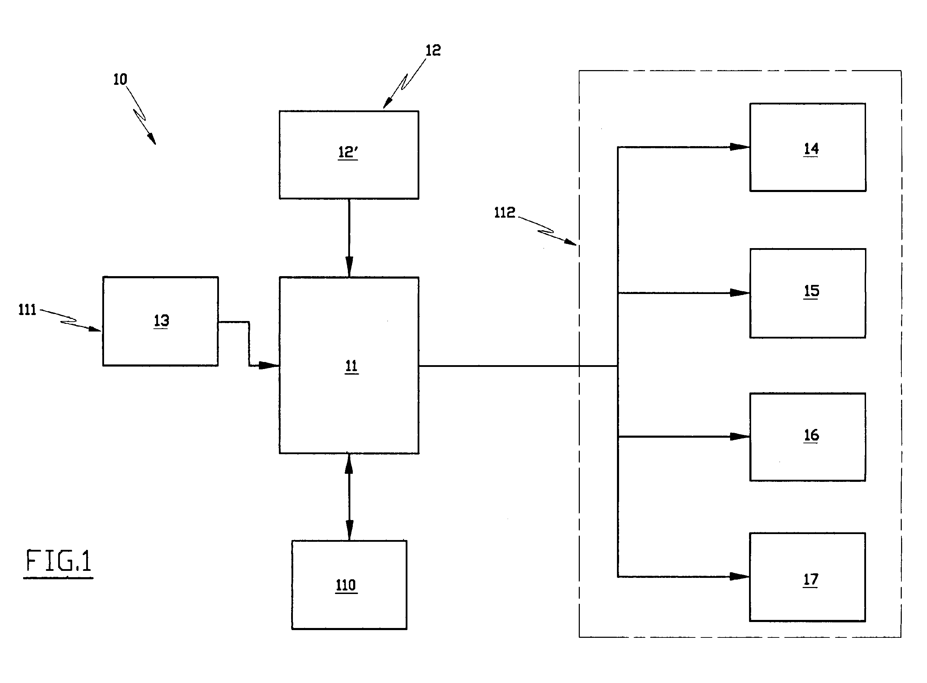

Figure 1 illustrates the main components of the apparatus of the invention, which primarily comprises an electronic control unit 11 and a device 12 which can determine the vehicle speed, for example a motor vehicle, wherein the electronic control unit 11 is able to process the data determined by the device 12. In the first embodiment of the invention the device 12 comprises a GPS receiver 12 (global position system), of known type, able to determine both the actual speed of the vehicle and the position of the vehicle.

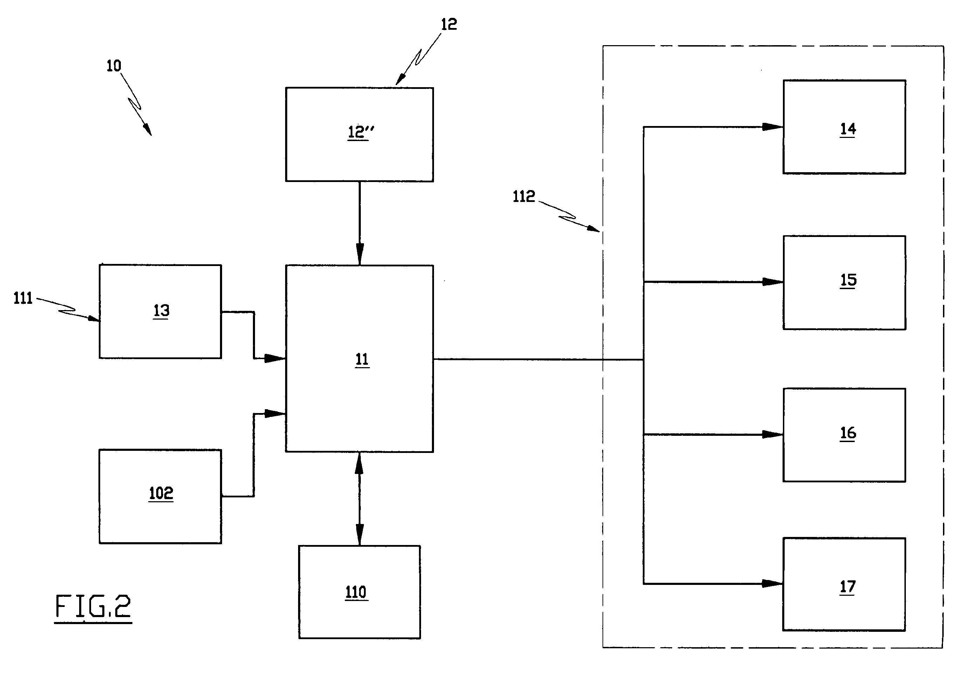

In a second embodiment of the invention, illustrated in figure 2, the device 12 is configured in order to determine the value of the actual speed of the vehicle from a speed sensor 12" known as an odometer or tachometer, installed on the vehicle.

A data storage unit 110 is associated to the electronic control unit 11, for example a RAM memory, for storing the speed limit relating to the actual tract of road the vehicle is moving along. In the invention, the speed limit is determined thanks to special detecting means 111 connected to the electronic control unit 11.

The detecting means 111 comprise, in this embodiment of the invention, a circuit 13 in which a software program is installed, of known type, which is able to read the speed limits from advanced data maps known as ADAS (Advanced Driver Assistance System). The circuit 13 can alternatively be integrated in the electronic control unit 11 or can be connected to the electronic control unit 11, while the ADAS maps can alternatively be stored in the circuit 13 or in the electronic control unit 11 or in a usual data storage unit, not illustrated as of known type, connected to the electronic control unit 11.

The updating of the road maps can be done by use of a programmable memory, a replaceable cartridge or in wireless mode.

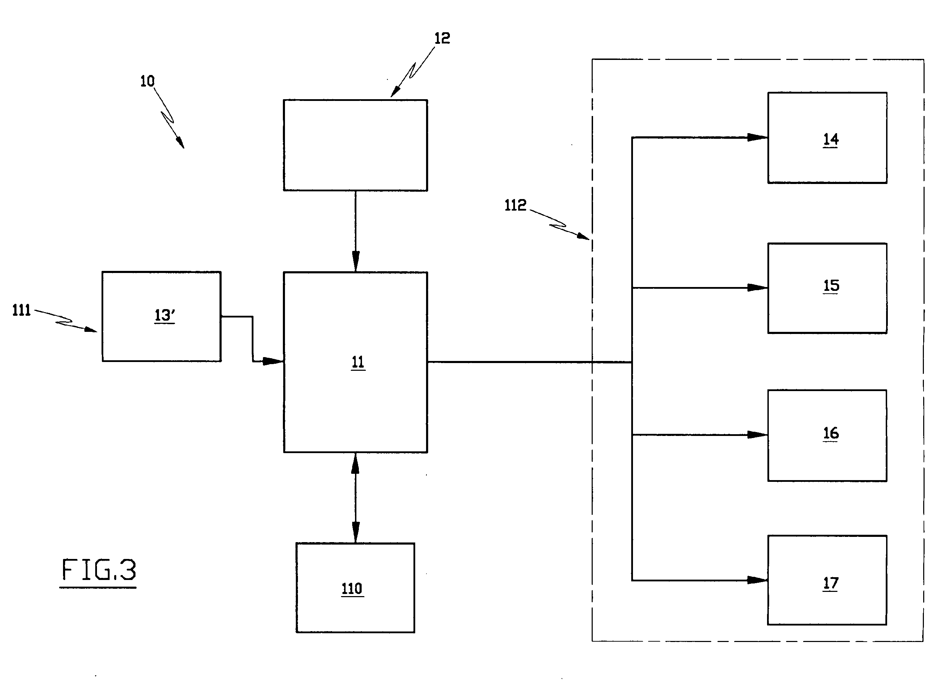

In a variant of the invention (figure 3) the speed limit detecting means 111 comprise an optical system 13' designed to detect the images on speed limit road signals on the road. The images are processed by a software program for optical recognition of the characters present in the images. In this way the data storage unit 110 stores the speed limits detected by the optical system 13' and processed via the software, stored in the electronic control unit 11.

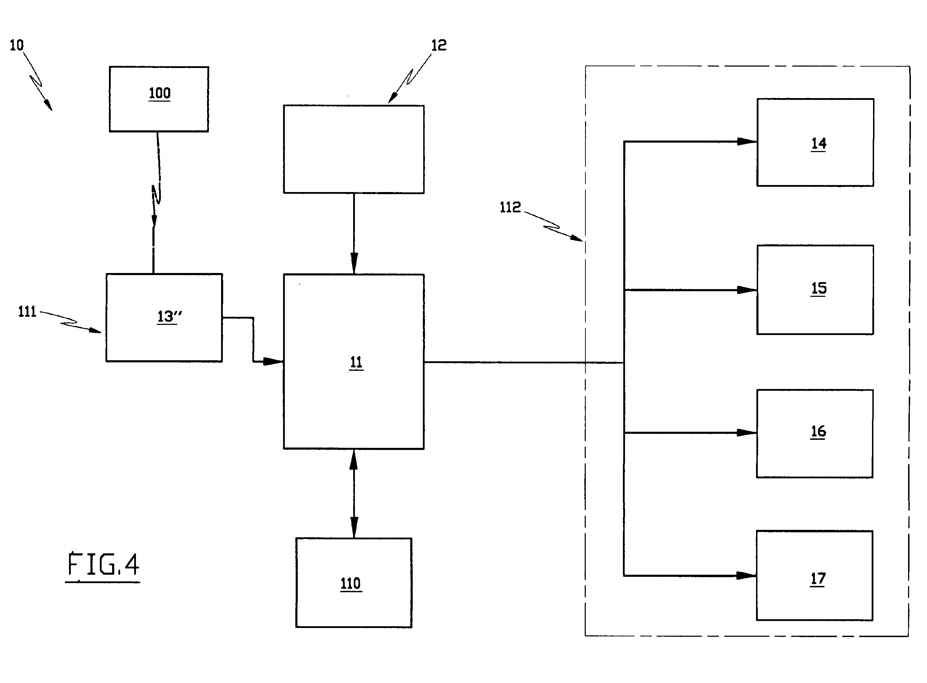

In a further variant (figure 4) of the invention the detecting means 111 of the speed limits comprise a receiving system 13" of the limits in the form of data transmitted by a remote transmission unit 100.

Signalling means 112 are also connected to the electronic control unit 11, which are configured such as to differentiate between the alarm signals according to the conditions set down by the law in the locality in which the vehicle is travelling and the difference between the vehicle speed and the speed limit.

The signalling means 112 can comprise at least one of the following devices connected to the electronic control unit 11:
a device 14 designed to generate an alarm signal of an acoustic type, i.e. for example a buzzer, with different frequencies according to the amount the limit has been exceeded by;
a projector 15 designed to generate an alarm signal of a visual type: for example a Head Up Display (HUD) with a display flash that is different according to the amount the limit has been exceeded by;
a transmission system 16 designed to transmit a remote alarm signal in the form of an SMS text message 16, i.e. a message predefined and memorised in the electronic control unit 11 or in the system 16, to be sent to predefined telephone numbers, with an indication of the amount the limit has been exceeded by;
a transmission system 17 configured to transmit a remote alarm signal in the form of data via the World Wide Web, i.e. an alarm signal to be displayed on a Web site, with an indication of the amount the limit has been exceeded by.
From what has been described herein above it can be deduced that the apparatus of the invention can be realised in various embodiments. In particular, in the first embodiment the value of the actual speed of the vehicle is determined by means of the GPS receiver 12', and the speed limit is determined via the software installed in the circuit 13, which is able to read the speed limits from ADAS maps (Advanced Driver Assistance System).

This embodiment of the invention is particularly reliable and very precise in determining the speed values.

The second embodiment of the apparatus of the invention comprises use of a speed sensor 12" installed on board the vehicle, for determining the actual present speed of the vehicle, and the use of the optical system 13' and the software program for detecting and thereafter processing the images from road signals indicating the speed limit, located on the road, such as to determine the speed limit. This second embodiment of the invention is particularly advantageous from the economical point of view.

In a different embodiment the actual speed of the vehicle is determined by the GPS receiver 12', and the speed limit is determined by the optical system 13' designed to detect the image from road speed limit signals located on the roadway. The images are processed by the software for optical recognition of the characters present in the images, in order to recognise the numerical values indicating the speed limits of the road.

The following is a description of the apparatus 10 of the first embodiment which comprises the GPS device 12' for detecting the actual speed of the vehicle and the circuit 13 for detecting the speed limit on the road the vehicle is travelling along.

The other embodiments of the invention differ, in terms of their functioning, only in the determination of the speed limit on the road and the actual vehicle speed.

In the first embodiment of the apparatus of the invention, calculations are made of both the geographical coordinates of the vehicle on which the apparatus 10 is installed and the actual speed of the vehicle by means of the GPA receiver 12', which is provided with an antenna, not illustrated as of known type.

Starting from the coordinates, the software installed in the circuit 13 determines the speed limits from ADAS (Advanced Driver Assistance System).

Once the speed limit on the tract the vehicle is travelling along is known, the electronic control unit 11 determines the difference between the limit and the actual vehicle speed. If the difference is above a predetermined amount, the electronic control unit 11 activates the signalling means 112 designed to generate an alarm signal to alert the driver.

The signalling means are configured to differentiate the alarm signals according to the conditions set out in the existing legislation in the locality in which the vehicle is travelling and the difference between the actual vehicle speed and the set speed limit.

For this purpose the electronic control unit 11 comprises a database which stores, for each country, the speed limits set by the law in the country in which the vehicle is travelling and other parameters to be respected in the road circulation laws, as well as any penalties relating to the speed limits. In the first embodiment of the invention, the country is determined automatically thanks to the geographical coordinates relative to the position of the vehicle, identified by the GPS receiver 12'.

Obviously in the embodiments comprising use of the speed sensor 12", in place of the GPS receiver 12' the electronic control unit is connected to a multi-choice selector 102 (figure 2) by means of which the country the vehicle is circulating in can be selected.

Taking Italian law as an example, the following penalties exist in relation to licence penalty points, according to the gravity of the infraction relative to the speed limits:
excess speed (above 10 km/h and less than 40 km/h): penalty: - 5 points;
excess speed (above 40 km/h: penalty: - 10 points.

The system of the invention can, for example, alert the driver using two different types of signal, according to whether the speed limit is exceeded by at least 10 km/h or by 40 km/h, considerably reducing the number of signals and enabling a much more effective intervention.

For example, in a case of displaying the speed value using HUD the following logic could be observed:

| **EXCESS SPEED** | **DISPLAY MODE** |
|---|---|
| Less than 10 km/h; | No display |
| More than 10 km/h and less than 40 km/h; | Fixed-velocity display |
| More than 40 km/h | Intermittent speed display |

It is clear that the novel concepts described above naturally extend also to situations in which the differentiation of the alarm according to the licence penalty points or other penalty systems depends not only on the locality in which the vehicle is travelling, but can also depend on other conditions and parameters sanctioned by the local laws, such as for example the age of the driver, where for example there may be special limits and/or more severe penalties for young drivers, or it can depend on prescribed times of day (for example, if the vehicle is a lorry, different limits might exist for weekend days or holidays).

In general, then, the alarms will be set according to the conditions set by the existing law in the locality in which the vehicle is travelling.

## Claims

1. An apparatus (10) for generating an alarm signal for a vehicle driver in relation to an actual speed of the vehicle, comprising
a. a device (12) for determining the actual speed of the vehicle and,
b. a device (12') to determine automatically the country in which the vehicle is travelling by means of the identification of the geographical coordinates relative to the position of the vehicle by a GPS receiver or a multi-choice selector (102) by means of which the country the vehicle is circulating in can be selected,
c. detecting means (111) of a speed limit set for a tract of road in which the car is travelling,
d. an electronic control unit (11) connected to the device (12) and to the detecting means (111) and provided with a data storage unit (110) for memorising the speed limit, wherein the electronic control unit (11) comprises a database which stores for each country the speed limits set by the law in the country in which the vehicle is travelling and any penalties relating to the speed limits, the electronic control unit (11) being configured to determine the difference between the speed limit and the actual vehicle speed,
the apparatus (10) further comprising
e. signalling means (112) for generating at least an alarm to the driver,
**characterized in that** the signalling means (112) are configured such as to differentiate the alarms according to the license penalty points set by legislation in a locality in which the vehicle is travelling corresponding to the determined difference between the actual vehicle speed and the set speed limit.

2. The apparatus of claim 1, **characterised in that** the detecting means (111) comprise a circuit (13) on which a software program is installed for detecting the speed limits from street maps.

3. The apparatus of claim 2, **characterised in that** the software program is configured such as to detect the speed limits from advanced data maps (13) known as ADAS.

4. The apparatus of claim 1, **characterised in that** the detecting means (11) of the speed limits comprise an optical system (13') destined to detect signalling images relating to speed limits and a software program, stored in the electronic control unit (11), for optical recognition of characters present in the images captured by the optical system.

5. The apparatus of claim 1, **characterised in that** the detecting means of the speed limits comprise a receiving system (13") of the limits in a form of data.

6. The apparatus of claim 1, **characterised in that** the signalling means (112) comprise a device (14) for generating an acoustic alarm signal (14) which has different frequencies according to a difference in an excess speed.

7. The apparatus of claim 1, **characterised in that** the signalling means (112) comprise a projector (15) for generating a visual alarm signal.

8. The apparatus of claim 7, **characterised in that** the projector (15) is configured such as to project a visual alarm signal which flashes differently according to a quantity of speed in excess.

9. The apparatus of claim 7, wherein the projector (15) is configured such as to generate and project different visual alarm signals in an Head Up Display mode.

10. The apparatus of claim 1, **characterised in that** the signalling means (112) comprise a transmission system (16) destined to transmit a remote alarm signal in a form of SMS text messages (16), being an alarm to be sent to predefined telephone numbers, indicating a difference between the actual speed of the vehicle and the speed limit.

11. The apparatus of claim 10, **characterised in that** the SMS text message is predefined and stored in the electronic control unit (11) or in the data storage unit (110).

12. The apparatus of claim 1, **characterised in that** the signalling means (112) comprise a transmission system (17) configured such as to transmit a remote alarm in a form of data via the World Wide Web, being an alarm to be displayed in a special Web site, with an indication of a type of speed limit exceeded.

13. A method for controlling functioning of the apparatus of claim 1, which comprises following operating steps:
- calculating an actual vehicle speed,
- detecting a speed limit of the tract of road a vehicle is travelling along,
- calculating a difference between the actual vehicle speed and the speed limit of the tract of road,
- determine a country in which the vehicle is travelling by means of the identification of the geographical coordinates relative to the position of the vehicle by a GPS receiver or a multi-choice selector (102) by means of which the country the vehicle is circulating in can be selected,
- storing in a database of the electronic control unit (11) for each country the speed limits set by the law in the country in which the vehicle is travelling and any penalties relating to the speed limits,
- alerting the driver using two different types of signals differentiated according to the license penalty points set by legislation in a locality in which the vehicle is travelling corresponding to the determined difference between the actual vehicle speed and the set speed limit.

## Patentansprüche

1. Vorrichtung (10) zum Erzeugen eines Alarmsignals für einen Fahrzeugführer in Bezug auf eine Ist-Geschwindigkeit des Fahrzeugs, umfassend:
a. ein Gerät (12) zum Bestimmen der Ist-Geschwindigkeit des Fahrzeugs und
b. ein Gerät (12') zum automatischen Bestimmen des Lands, in dem das Fahrzeug fährt, mittels der Bestimmung der geografischen Koordinaten bezüglich der Position des Fahrzeugs durch einen GPS-Empfänger oder einen Mehrfachwahlschalter (102), mit dem das Land, in dem das Fahrzeug verkehrt, gewählt werden kann,
c. Mittel (111) zum Detektieren einer Geschwindigkeitsbegrenzung, die für einen Straßenabschnitt festgesetzt ist, in dem das Auto fährt,
d. eine elektronische Steuereinheit (11), die mit dem Gerät (12) und den Detektionsmitteln (111) verbunden und mit einer Datenspeichereinheit (110) zum Speichern der Geschwindigkeitsbegrenzung verbunden ist, wobei die elektronische Steuereinheit (11) eine Datenbank umfasst, die für jedes Land die Geschwindigkeitsbegrenzungen, die in dem Land, in dem das Fahrzeug fährt, gesetzlich festgesetzt sind und alle die Geschwindigkeitsbegrenzungen betreffenden Sanktionen speichert, wobei die elektronische Steuereinheit (11) gestaltet ist, um die Differenz zwischen der Geschwindigkeitsbegrenzung und der Ist-Fahrzeuggeschwindigkeit zu bestimmen,
wobei die Vorrichtung (10) ferner Folgendes umfasst:
e. Signalmittel (112) zum Erzeugen von zumindest einem Alarm an den Fahrer,
**dadurch gekennzeichnet, dass** die Signalmittel (112) derart gestaltet sind, dass sie die Alarme gemäß den Fahrerlaubnis-Strafpunkten unterscheiden, die von der Gesetzgebung in einem Ort, in dem das Fahrzeug fährt, in Entsprechung mit der bestimmten Differenz zwischen der Ist-Fahrzeuggeschwindigkeit und der festgesetzten Geschwindigkeitsbegrenzung festgesetzt sind.

2. Vorrichtung nach Anspruch 1, **dadurch gekennzeichnet, dass** die Detektionsmittel (111) eine Schaltung (13) umfassen, auf der ein Software-Programm zum Ermitteln der Geschwindigkeitsbegrenzungen aus Straßenkarten installiert ist.

3. Vorrichtung nach Anspruch 2, **dadurch gekennzeichnet, dass** das Software-Programm gestaltet ist, um die Geschwindigkeitsbegrenzungen aus fortgeschrittenen Datenkarten (13), bekannt als ADAS, zu ermitteln.

4. Vorrichtung nach Anspruch 1, **dadurch gekennzeichnet, dass** die Detektionsmittel (11) für die Geschwindigkeitsbegrenzungen ein optisches System (13'), das zum Detektieren von die Geschwindigkeitsbegrenzungen betreffenden Signalbildern vorgesehen ist, und ein in der elektronischen Steuereinheit (11) gespeichertes Software-Programm zum optischen Erkennen von Zeichen umfassen, die in den vom optischen System erfassten Bildern enthalten sind.

5. Vorrichtung nach Anspruch 1, **dadurch gekennzeichnet, dass** die Detektionsmittel für die Geschwindigkeitsbegrenzungen ein Empfangssystem (13") für die Begrenzungen in Form von Daten umfassen.

6. Vorrichtung nach Anspruch 1, **dadurch gekennzeichnet, dass** die Signalmittel (112) ein Gerät (14) zum Erzeugen eines akustischen Alarmsignals (14) umfassen, das unterschiedliche Frequenzen in Übereinstimmung mit einer Differenz bei einer zu hohen Geschwindigkeit aufweist.

7. Vorrichtung nach Anspruch 1, **dadurch gekennzeichnet, dass** die Signalmittel (112) einen Projektor (15) zum Erzeugen eines visuellen Alarmsignals umfassen.

8. Vorrichtung nach Anspruch 7, **dadurch gekennzeichnet, dass** der Projektor (15) gestaltet ist, um ein visuelles Alarmsignal zu projizieren, das in Übereinstimmung mit einem Betrag zu hoher Geschwindigkeit unterschiedlich blinkt.

9. Vorrichtung nach Anspruch 7, wobei der Projektor (15) gestaltet ist, um unterschiedliche visuelle Alarmsignale zu erzeugen und in einem Head-Up-Display-Modus zu projizieren.

10. Vorrichtung nach Anspruch 1, **dadurch gekennzeichnet, dass** die Signalmittel (112) ein Übertragungssystem (16) umfassen, dass dazu vorgesehen ist, ein Fern-Alarmsignal in Form einer SMS-Textnachricht (16) zu übertragen, wobei es sich um einen an vorgegebene Telefonnummern zu sendenden Alarm handelt, der eine Differenz zwischen der Ist-Geschwindigkeit des Fahrzeugs und der Geschwindigkeitsbegrenzung angibt.

11. Vorrichtung nach Anspruch 10, **dadurch gekennzeichnet, dass** die SMS-Textnachricht vorgegeben und in der elektronischen Steuereinheit (11) oder in der Datenspeichereinheit (110) gespeichert ist.

12. Vorrichtung nach Anspruch 1, **dadurch gekennzeichnet, dass** die Signalmittel (112) ein Übertragungssystem (17) umfassen, das gestaltet ist, um einen Fernalarm in Form von Daten über das World Wide Web zu übertragen, wobei es sich um einen auf einer besonderen Website anzuzeigenden Alarm mit einer Angabe eines Typs einer überschrittenen Geschwindigkeitsbegrenzung handelt.

13. Verfahren zum Steuern der Arbeitsweise der Vorrichtung nach Anspruch 1, das die folgenden Arbeitsschritte umfasst:
- Berechnen einer Ist-Fahrzeuggeschwindigkeit,
- Detektieren einer Geschwindigkeitsbegrenzung des Straßenabschnitts, den ein Fahrzeug entlangfährt,
- Berechnen einer Differenz zwischen der Ist-Fahrzeuggeschwindigkeit und der Geschwindigkeitsbegrenzung des Straßenabschnitts,
- Bestimmen eines Lands, in dem das Fahrzeug fährt, mittels der Bestimmung der geografischen Koordinaten bezüglich der Position des Fahrzeugs durch einen GPS-Empfänger oder einen Mehrfachwahlschalter (102), mit dem das Land, in dem das Fahrzeug verkehrt, gewählt werden kann,
- Speichern für jedes Land der Geschwindigkeitsbegrenzungen, die in dem Land, in dem das Fahrzeug fährt, gesetzlich festgesetzt sind, und aller die Geschwindigkeitsbegrenzungen betreffenden Sanktionen in einer Datenbank der elektronischen Steuereinheit (11),
- Warnen des Fahrers mit zwei verschiedenen Arten von Signalen, die gemäß den Fahrerlaubnis-Strafpunkten differenziert sind, die von der Gesetzgebung in einem Ort, in dem das Fahrzeug fährt, in Entsprechung mit der bestimmten Differenz zwischen der Ist-Fahrzeuggeschwindigkeit und der festgesetzten Geschwindigkeitsbegrenzung festgesetzt sind.

## Revendications

1. Appareil (10) pour générer un signal d'alarme pour un conducteur de véhicule en relation avec une vitesse réelle du véhicule, comprenant
a. un dispositif (12) pour déterminer la vitesse réelle du véhicule et,
b. un dispositif (12') pour déterminer automatiquement le pays dans lequel le véhicule circule au moyen de l'identification des coordonnées géographiques relatives à la position du véhicule par un récepteur GPS ou un sélecteur à choix multiples (102) au moyen duquel le pays dans lequel le véhicule circule peut être sélectionné,
c. des moyens de détection (111) d'une limite de vitesse fixée pour un tronçon de route sur lequel la voiture circule,
d. une unité de commande électronique (11) connectée au dispositif (12) et aux moyens de détection (111) et munie d'une unité de stockage de données (110) pour mémoriser la limite de vitesse, dans lequel l'unité de commande électronique (11) comprend une base de données qui stocke pour chaque pays les limites de vitesse fixées par la loi dans le pays dans lequel le véhicule circule et toutes les sanctions relatives aux limites de vitesse, l'unité de commande électronique (11) étant configurée pour déterminer la différence entre la limite de vitesse et la vitesse réelle du véhicule,
l'appareil (10) comprenant en outre
e. des moyens de signalisation (112) pour générer au moins une alarme pour le conducteur,
**caractérisé en ce que** les moyens de signalisation (112) sont configurés de manière à différencier les alarmes en fonction des points de pénalité du permis fixés par la législation dans une localité dans laquelle le véhicule circule correspondant à la différence déterminée entre la vitesse réelle du véhicule et la limite de vitesse fixée.

2. Appareil selon la revendication 1, **caractérisé en ce que** les moyens de détection (111) comprennent un circuit (13) sur lequel un programme logiciel est installé pour détecter les limites de vitesse à partir de plans de rues.

3. Appareil selon la revendication 2, **caractérisé en ce que** le programme logiciel est configuré de manière à détecter les limites de vitesse à partir de cartes de données avancées (13) connues comme ADAS.

4. Appareil selon la revendication 1, **caractérisé en ce que** les moyens de détection (11) des limites de vitesse comprennent un système optique (13') destiné à détecter des images de signalisation relatives à des limites de vitesse et un programme logiciel, stocké dans l'unité de commande électronique (11), pour la reconnaissance optique des caractères présents dans les images capturées par le système optique.

5. Appareil selon la revendication 1, **caractérisé en ce que** les moyens de détection des limites de vitesse comprennent un système de réception (13") des limites sous une forme de données.

6. Appareil selon la revendication 1, **caractérisé en ce que** les moyens de signalisation (112) comprennent un dispositif (14) pour générer un signal d'alarme acoustique (14) qui a des fréquences différentes en fonction d'une différence dans une vitesse excessive.

7. Appareil selon la revendication 1, **caractérisé en ce que** les moyens de signalisation (112) comprennent un projecteur (15) pour générer un signal d'alarme visuel.

8. Appareil selon la revendication 7, **caractérisé en ce que** le projecteur (15) est configuré de manière à projeter un signal d'alarme visuel qui clignote différemment en fonction de la quantité de vitesse en excès.

9. Appareil selon la revendication 7, **caractérisé en ce que** le projecteur (15) est configuré pour générer et projeter des signaux d'alarme visuels différents dans un mode d'affichage tête-haute.

10. Appareil selon la revendication 1, **caractérisé en ce que** les moyens de signalisation (112) comprennent un système de transmission (16) destiné à transmettre un signal d'alarme à distance sous une forme de messages textes SMS (16), qui sont une alarme à envoyer à des numéros de téléphone prédéfinis, indiquant une différence entre la vitesse réelle du véhicule et la limite de vitesse.

11. Appareil selon la revendication 10, **caractérisé en ce que** le message texte SMS est prédéfini et stocké dans l'unité de commande électronique (11) ou dans l'unité de stockage de données (110).

12. Appareil selon la revendication 1, **caractérisé en ce que** les moyens de signalisation (112) comprennent un système de transmission (17) configuré de manière à transmettre une alarme à distance sous une forme de données sur le Web, qui est une alarme à afficher sur un site Web spécial, avec une indication d'un type de limite de vitesse dépassée.

13. Procédé pour commander le fonctionnement de l'appareil selon la revendication 1, qui comprend les étapes suivantes :
- le calcul d'une vitesse réelle de véhicule,
- la détection d'une limite de vitesse du tronçon de route le long duquel un véhicule circule,
- le calcul d'une différence entre la vitesse réelle du véhicule et la limite de vitesse du tronçon de route,
- la détermination d'un pays dans lequel le véhicule circule au moyen de l'identification des coordonnées géographiques relatives à la position du véhicule par un récepteur GPS ou un sélecteur à choix multiples (102) au moyen duquel le pays dans lequel le véhicule circule peut être sélectionné,
- le stockage dans une base de données de l'unité de commande électronique (11) pour chaque pays des limites de vitesse fixées par la loi dans le pays dans lequel le véhicule circule et toutes les sanctions relatives aux limites de vitesse,
- l'avertissement du conducteur en utilisant deux types de signaux différents différenciés en fonction des points de pénalité du permis fixés par la législation dans une localité dans laquelle le véhicule circule correspondant à la différence déterminée entre la vitesse réelle du véhicule et la limite de vitesse fixée.
